# EUROPEAN PATENT SPECIFICATION

(11) **EP 4 524 419 B1**
(45) Date of publication and mention of the grant of the patent: **01.04.2026**
(21) Application number: 23196696.1
(22) Date of filing: 12.09.2023
(51) Int. Cl.: F16D 65/00

(54) **AIR CLEANING DEVICE**
LUFTREINIGUNGSVORRICHTUNG
DISPOSITIF DE PURIFICATION D'AIR

(43) Date of publication of application: 19.03.2025
(73) Proprietor: MANN+HUMMEL GmbH, 71636 Ludwigsburg (DE)
(72) Inventor: DOS SANTOS ASCENSAO, Macario Francisco, 71636 Ludwigsburg (DE)
(74) Representative: Mann + Hummel Intellectual Property

(56) References cited:
- WO-A1-2019/245220
- KR-B1- 100 807 813
- US-A1- 2016 105 996
- US-A1- 2023 016 203
- US-A1- 2023 233 974

## Description

### TECHNICAL AREA

The invention relates to an air cleaning device like a brake dust filter device for a disc brake assembly. Furthermore, the invention relates to a vehicle with an air cleaning device.

### BACKGROUND ART

EP 2 522 876 A1 describes a disc brake assembly which includes a rotor that is turned by motion of a vehicle; a caliper and brake pads attached to the caliper; the rotor having an inside face periphery, an outside face periphery and an outside diameter periphery; a filter disposed within a shroud, the shroud being disposed proximate to the rotor so as to cover at least about 70% of at least one of the inside face and the outside face peripheries wherein the shroud houses a radially inner filter and a radially outer filter, and wherein when said vehicle is in motion, rotation of said rotor moves brake dust into said radial inner filter and said radially outer filter.

WO 2018/134313 A1 discloses an ambient air purification device in a road vehicle designed to remove fine dust from the ambient air. The ambient air purification device has a filter element and is arranged transversely to a longitudinal axis of the vehicle in an outer region of the vehicle. It is housed in an installation space provided by a vehicle frame.

US 2023/233974 A1 discloses a combined bypass filter element module. The combined bypass filter element module includes at least one filter slot for receiving at least one filter element that can be arranged in the at least one filter slot. A bypass flap device is arranged in a flow direction in parallel with the at least one filter slot.

It is an object of the invention to provide an air cleaning device with a filter element in which the air flow to the filter element can be easily adjusted.

### SUMMARY

According to the invention, an air cleaning device is provided which can be used in vehicles, in particular in motor vehicles, to clean air which is released in the environment or which is used in the vehicle for further purpose. For example, the air cleaning device is designed as a brake dust filter device for collecting collect dust and particles which are produced by friction in a disc brake assembly when the vehicle brake is actuated.

The air cleaning device includes a filter element and an air guide region in flow connection with the filter element. In the air guide region an adjustable air guide flap is arranged for adjusting the air flow passing the air guide region. The air guide flap is mounted on a pivot joint and can be turned about the rotational axis of the pivot joint between a closed position with reduced or zero air flow and an open position with maximum air flow. In a preferred embodiment, the pivot joint is arranged in a housing of the air guide region which can be part of the housing of the air cleaning device. The air guide flap has a closing section and an opening section which are connected with each other. The pivot joint is arranged between the closing section and the opening section of the air guide flap. The closing section forms an air resistance surface for the air flow passing through the air guide region.

In this configuration, the air guide flap is able to react to the pressure exerted by the air flow. When hitting the closing section while standing in its open position the air guide flap turns about the rotational axis of the pivot joint if the velocity and hence the pressure of the air flow is high enough. As a result, the air guide flap turns from the open position into the closed position so that only a smaller air flow or no air flow is allowed to pass the air guide region. Depending on the pressure of the air flow, the air guide flap turns into a completely closed position or into an intermediate position between the closed position and a maximum open position. "Open position" includes all positions of the air guide flap which have an open cross-sectional area greater than the cross-sectional area in the closed position in which the open cross-sectional area is either zero or a minimum.

The air guide flap is moved by the air flow hitting the closing section. When integrated in a vehicle the air flow may depend on the velocity of the vehicle. Hence, when traveling with high speed the air flow hits the closing section of the air guide flap with the same speed as the vehicle speed and turns the air guide flap into the closed position so that the filter element which is arranged downstream of the air guide flap receives no air or only a minimum of air for filtration purpose. Vice versa, when traveling with low speed the air flow passing the air guide region through the open-air guide flap and the filter element is a maximum.

In a preferred embodiment, the opening section of the air guide flap has a greater mass than the closing section so that in the closed position a torque directed into the open position acts on the air guide flap. Hence, without air flow or with a reduced air flow the air guide flap remains in its open position. The air guide flap turns from the closed position into the open position when the air flow hitting the closing section exerts a torque on the air guide flap which is lower than the torque created of the greater mass of the opening section.

The air guide flap will only turn from the open position into the closed position when the air flow hitting the closing section exerts a torque on the air guide flap which is higher than the torque created of the greater mass of the opening section.

In this configuration the air cleaning device works without actuator.

In another preferred embodiment, the opening section and the closing section are each rectilinear and have a common longitudinal axis. The opening section and the closing section may be configured as a one-piece element.

According to another preferred embodiment, the closing section has a greater length than the opening section which enhances the ability of the closing section to form an air resistance surface for the air flow. Alternatively, the closing section is not longer than the opening section but has a cross-sectional design which increases the air resistance, for example a convex cross-sectional design. In yet another embodiment, the closing section is longer than the opening section and also has a cross-sectional design which increases the air resistance. The air flow hits the closing section and pushes the air guide flap into the closed position.

In another advantageous embodiment an angular end part is formed at the opening section which lies at an angle greater than zero to the closing section, preferably in a value range from 30° to 60°. In the closed position the angular end part forms an air resistance surface in the air flow in a way that stabilizes the closed position of the air guide flap even when the closing section of the air guide flap lies parallel to the direction of the air flow without providing resistance. It is beneficial that the straight part of the closing section is longer than the straight part of the opening section without the angular end part.

In yet another embodiment the opening section is supported by a stopper in the open position, the stopper limiting the opening movement of the air guide flap. The stopper can be placed in the housing of the air guide region. It is advantageous that the stopper limits the air guide flap position to a maximum open position which allows a maximum air flow passing the air guide flap.

In another embodiment the closing section is supported by another stopper in the closed position, the stopper limiting the closing movement of the air guide flap. This stopper can also be placed in the housing of the air guide region. It is advantageous that this stopper keeps the air guide flap in such a closed position that the air guide flap lies parallel to the direction of the air flow.

In another advantageous embodiment the air guide region is designed as an air supply region which is placed upstream of the filter element. The air supply region is the air intake section of the air cleaning device. When integrated in a vehicle the air supply region receives an air flow which has the velocity of the vehicle.

In an alternative embodiment the air guide region is designed as the outlet of the air cleaning device, the air guide flap controlling the outlet air flow downstream the filter element.

According to the invention the air guide flap has one or several openings which allow passing a reduced air flow. Hence, even in the closed position a minimum air flow can pass the air guide flap. The minimum air flow depends on the size and the number of openings in the air guide flap. The openings can be arranged in the opening section. However, it is also possible to arrange the openings in the closing section or both in the closing and the opening section.

In another embodiment several air guide flaps are arranged in the air guide region. The air guide flaps may be arranged next to each other over the width/and or over a part of the length of the air guide region. It is advantageous that all air guide flaps are designed identically. Alternatively, only one air guide flap is arranged in the air guide region.

In yet another embodiment the air cleaning device is designed as a passive device without actuator. The movement of the air guide flap is solely accomplished by the air flow and torques based on the center of gravity and the position of the pivot joint.

Alternatively, the air cleaning device is designed as an active device with an actuator for adjusting the air guide flap.

The invention also refers to a vehicle with an aforementioned air cleaning device. The vehicle is preferably a land vehicle, e.g. a passenger car, a truck, a construction vehicle or an agricultural vehicle. The air cleaning device can be arranged on the underbody of the vehicle.

### BRIEF DESCRIPTION OF DRAWINGS

A description will now be given as a non-limiting example of a form of embodiment of an air cleaning device according to the present invention. Reference will be made to the attached drawings, in which:
Fig. 1 is a plan view of an air cleaning device, the air cleaning device including a series of air guide flaps which stand in an open position;
Fig. 2 is a plan view of the air cleaning device with arrows representing the air flow hitting the air guide flaps;
Fig. 3 is a perspective view of the air cleaning device;
Fig. 4 is a plan view of the air cleaning device with the air guide flaps in a closed position;
Fig. 5 is a perspective view of the air cleaning device with the air guide flaps in the closed position;
Fig. 6 is a sectional view of the air cleaning device with additional air guide flaps;
Fig. 7 is an enlarged view of an air guide flap in the open position;
Fig. 8 is an enlarged view of an air guide flap in the closed position;
Fig. 9 is a view of several air guide flaps in the closed position;
Fig. 10 is a sectional view of the air guide flaps according to line A-A in fig. 9;
Fig. 11 is a view of several air guide flaps in the open position; and
Fig. 12 is a sectional view of the air guide flaps according to line B-B in fig. 11.

In the figures, same components are provided with the same reference numerals.

### DETAILED DESCRIPTION

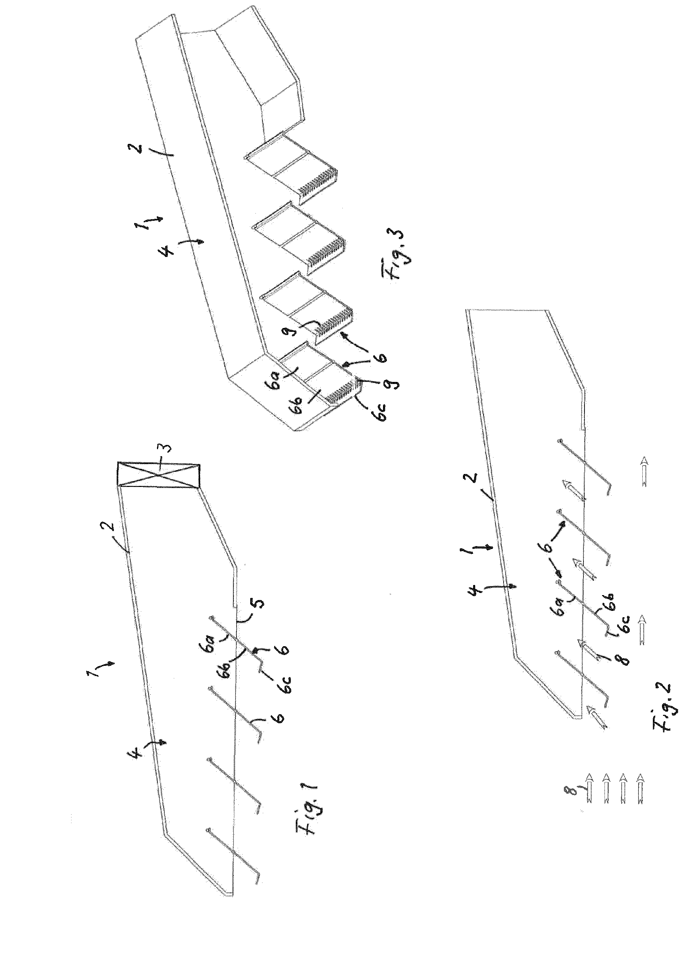

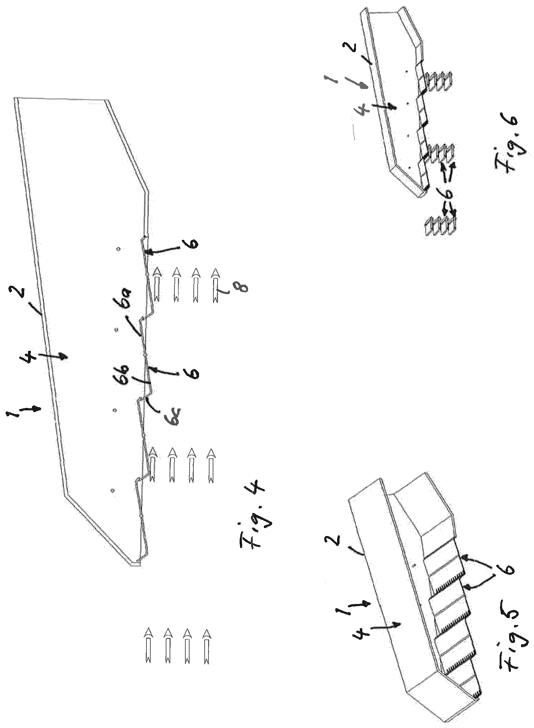

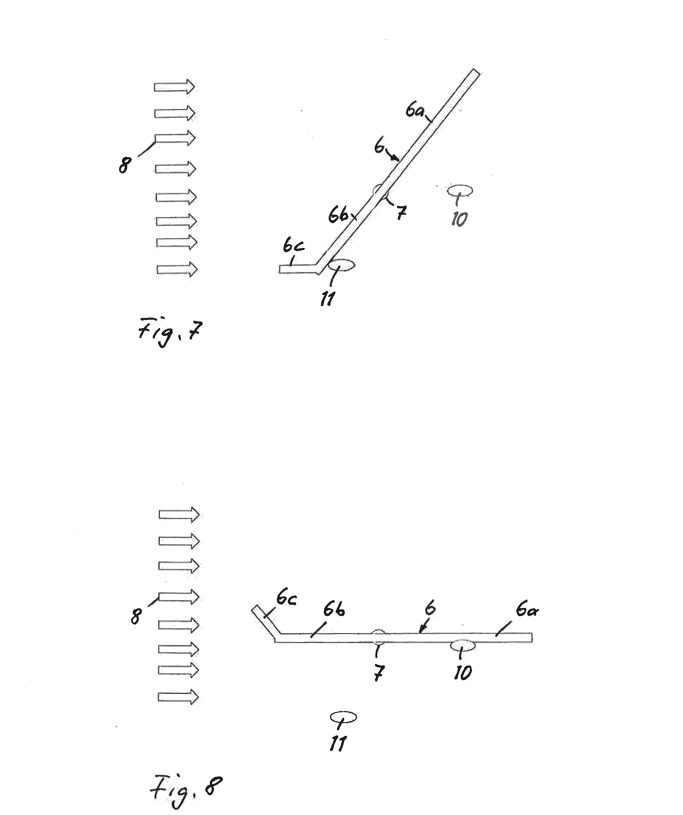

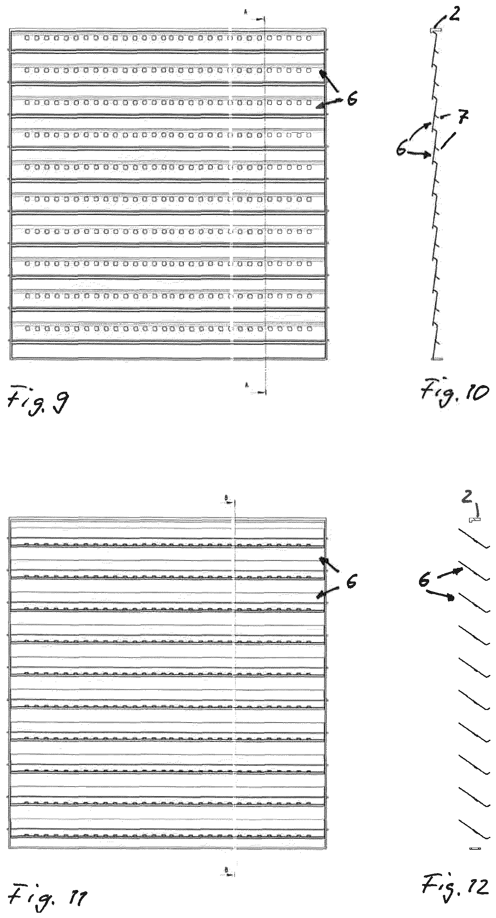

The figures depict an air cleaning device 1 which can be integrated for example in the underbody of a land vehicle for purifying ambient air. The air cleaning device 1 includes a housing 2 and a filter element 3 (fig. 1) which is accommodated in the housing 2. Upstream of the filter element 2 the housing 2 includes an air supply region 4 and an inlet opening 5 for supplying ambient air to the filter element 3. In the inlet opening 5 several air guide flaps 6 are arranged which are pivotally supported at pivot joints 7 (fig. 7, 8) and can be pivoted between an open position shown in fig. 1, 2, 3, 7, 11 and 12 and a closed position shown in fig. 4, 5, 6, 8, 9 and 10. The axis of the pivot joints is perpendicular to an air flow depicted with numeral 8. The pivot joints 7 may be part of the housing 2.

In the open position, air flow 8 can pass the air guide flaps 6 and enter the air supply region 4 where the air flow 8 is guided to the filter element 3 for purifying. Air guide flaps 6 stand in the open position when the air flow 8 is low, e.g. when the car is standing or travelling at low speed. In the closed position of air guide flaps 6, air flow 8 is reduced to a minimum or even to zero. The closed position corresponds to high velocity of the air flow 8. Hence, no ambient air or only a small amount of ambient air can enter the air supply region 4 of the housing 2 and hit the filter element 3.

Each air guide flap 6 consists of a closing section 6a and an opening section 6b which are each rectilinear and have a common longitudinal axis. The closing section 6a and the opening section 6b are configured as a one-piece element with the pivot joint 7 being arranged between both sections 6a, 6b and providing a rotation axis for the air guide flap 6 for rotating between the open position as depicted in fig. 7 and the closed position as depicted in fig. 8.

The opening section 6b has a slightly greater mass than the closing section 6a. Consequently, a torque directed into the open position acts on the air guide flap 6. Hence, without an ambient force acting on the air guide flap 6 it will either turn into the open position in case that it is in the closed position, or it will remain in the open position.

An angular end part 6c is formed at the opening section 6b, the angular end part 6c being part of the opening section 6b. The angular end part 6c is integral with the opening section 6b. In the closed position the closing section 6a and the opening section 6b lie in the inlet opening 5 and seal the inlet opening 5 to prevent the air flow 8 from entering the air supply region 4. The angular end part 6c is in an angular position to the air flow 8 which streams along the bottom side of the housing 2. The air flow 8 hits the angular end part 6c in a way that the pressure of the air flow 8 pushes the air guide flap 6 into the closed position, thus stabilizing the air guide flap 6 in the closed position. As soon as the velocity of the air flow 8 is reduced and falls below a threshold value which is determined by the greater mass of the opening section 6b, the air guide flap 6 turns into the open position again.

Over the length of the inlet opening 5 several air guide flaps 6 are arranged in a row, each air guide flap 6 being rotatably mounted at a pivot joint 7 so that the air guide flaps 6 can be turned independently from each other. All air guide flaps 6 are designed identically. As depicted in fig. 6, it may be expedient to arrange additional air guide flaps 6 in the transverse direction which is perpendicular to the length of the inlet opening 5.

The closing section 6a is longer than the opening section 6b, thus enhancing the air resistance surface for the air flow 8 so that the air flow 8 will easily turn the air guide flap 6 from the open position into the closed position in case the pressure of the air flow 8 is high enough. Additionally or alternatively, the closing section 6a has a cross-sectional design which increases the air resistance, for example a convex cross-sectional design.

The air guide flap 6 has several openings 9 (fig. 3) which allow passing a reduced air flow when standing in the closed position so that a minimum air flow can pass the air guide flap 6. The openings 9 are arranged in the opening section 6b of the air guide flap 6 in the proximity of the angular end part 6c. Some of the openings 9 are placed in the transition from the opening section 6b to the angular end part 6c.

In the closed position, the closing section 6a is supported by a stopper 10 which limits the closing movement of the air guide flap 6. Stopper 10 is arranged in the housing 2 of the air supply region 4 and keeps the air guide flap 6 in such a closed position that the air guide flap 6 lies parallel to the direction of the air flow 8. The stopper 10 may be part of the housing 2.

In the open position, the opening section 6b is supported by another stopper 11 which limits the opening movement of the air guide flap 6. This stopper 11 is also arranged in the housing 2 of the air supply region 4 and limits the position of the air guide flap 6 to a maximum open position which allows a maximum air flow 8 passing the air guide flap 6. The stopper 11 may be part of the housing 2.

## Claims

1. An air cleaning device (1) comprising:
a filter element (3);
an air guide region (4) in flow connection with the filter element (3); and
an air guide flap (6) being arranged in the air guide region (4) and being configured to adjust an air flow (8) passing the air guide region (4), the air guide flap (6) being mounted on a pivot joint (7) and being configured to be turned between a closed position and an open position, the air guide flap (6) comprising a closing section (6a) and an opening section (6b) being connected with the closing section (6a), the pivot joint (7) being arranged between the closing section (6a) and the opening section (6b), and the closing section (6a) forming an air resistance surface for the air flow (8) passing through the air guide region (4),
**characterised in that**
the air guide flap (6) comprises one or more openings (9).

2. The air cleaning device (1) according to claim 1, wherein the opening section (6b) has a mass greater than that of the closing section (6a) so that in the closed position, a torque being directed to the open position acts on the air guide flap (6).

3. The air cleaning device (1) according to claim 1 or 2, wherein the closing section (6a) has a length greater than that of the opening section (6b).

4. The air cleaning device (1) according to one of claims 1 to 3, wherein each of the opening section (6b) and the closing section (6a) is rectilinear and has a common longitudinal axis.

5. The air cleaning device (1) according to one of claims 1 to 4, wherein the air guide flap (6) further comprises an angular end part (6c) being arranged at the opening section (6b) and forming an angle with respect to the opening section (6b), the angle being in a value range from 30° to 60°.

6. The air cleaning device (1) according to one of claims 1 to 5, further comprising a stopper (11) configured to support the opening section (6b) in the open position.

7. The air cleaning device (1) according to one of claims 1 to 6, further comprising a stopper (10) configured to support the closing section (6a) in the closed position.

8. The air cleaning device (1) according to one of claims 1 to 7, wherein the air guide region (4) is an air supply region (4) upstream of the filter element (3).

9. The air cleaning device (1) according to one of claims 1 to 8, further comprising a plurality of air guide flaps (6) being arranged in the air guide region (4).

10. The air cleaning device (1) according to one of claims 1 to 9, wherein the air cleaning device (1) is a dust collecting device.

11. A vehicle comprising the air cleaning device (1) according to one of claims 1 to 10.

12. The vehicle according to claim 11, wherein the air cleaning device (1) is arranged on an underbody of the vehicle.

## Patentansprüche

1. Luftreiniger (1) umfassend:
ein Filterelement (3);
einen Luftleitbereich (4) in Strömungsverbindung mit dem Filterelement (3); und
wobei eine Luftleitklappe (6) im Luftleitbereich (4) angeordnet ist und dazu ausgelegt ist, eine den Luftleitbereich (4) durchströmende Luft (8) zu regulieren, wobei die Luftleitklappe (6) an einem Drehgelenk (7) angebracht ist und so konfiguriert ist, dass sie zwischen einer geschlossenen Position und einer offenen Position gedreht werden kann, wobei die Luftleitklappe (6) einen Verschlussabschnitt (6a) und einen mit dem Verschlussabschnitt (6a) verbundenen Öffnungsabschnitt (6b) umfasst, wobei das Drehgelenk (7) zwischen dem Verschlussabschnitt (6a) und dem Öffnungsabschnitt (6b) angeordnet ist, und wobei der Verschlussabschnitt (6a) eine Luftwiderstandsfläche für den durch den Luftleitbereich (4) strömenden Luftstrom (8) bildet,
**dadurch gekennzeichnet, dass**
die Luftleitklappe (6) eine oder mehrere Öffnungen (9) umfasst.

2. Luftreiniger (1) nach Anspruch 1, wobei der Öffnungsabschnitt (6b) eine größere Masse als der Verschlussabschnitt (6a) hat, so dass in der Schließposition ein in Richtung Öffnungsposition gerichtetes Drehmoment auf die Luftleitklappe (6) wirkt.

3. Luftreiniger (1) nach Anspruch 1 oder 2, wobei der Verschlussabschnitt (6a) eine größere Länge als die des Öffnungsabschnitts (6b) hat.

4. Luftreiniger (1) nach einem der Ansprüche 1 bis 3, wobei sowohl der Öffnungsabschnitt (6b) als auch der Verschlussabschnitt (6a) geradlinig sind und eine gemeinsame Längsachse aufweisen.

5. Luftreiniger (1) nach einem der Ansprüche 1 bis 4, wobei die Luftleitklappe (6) ferner ein winkelförmiges Endteil (6c) umfasst, das am Öffnungsabschnitt (6b) angeordnet ist und einen Winkel in Bezug auf den Öffnungsabschnitt (6b) bildet, wobei der Winkel in einem Wertebereich von 30° bis 60° liegt.

6. Luftreiniger (1) nach einem der Ansprüche 1 bis 5, ferner umfassend einen Verschluss (11), der so konfiguriert ist, dass er den Öffnungsabschnitt (6b) in der Öffnungsposition stützt.

7. Luftreiniger (1) nach einem der Ansprüche 1 bis 6, ferner umfassend einen Verschluss (10), der so konfiguriert ist, dass er den Verschlussabschnitt (6a) in der Schließposition stützt.

8. Luftreiniger (1) nach einem der Ansprüche 1 bis 7, wobei der Luftleitbereich (4) ein dem Filterelement (3) vorgeschalteter Luftzufuhrbereich (4) ist.

9. Luftreiniger (1) nach einem der Ansprüche 1 bis 8, der ferner eine Vielzahl von Luftleitklappen (6) umfasst, die im Luftleitbereich (4) angeordnet sind.

10. Luftreiniger (1) nach einem der Ansprüche 1 bis 9, wobei der Luftreiniger (1) eine Staubabscheidevorrichtung ist.

11. Fahrzeug umfassend den Luftreiniger (1) nach einem der Ansprüche 1 bis 10.

12. Fahrzeug nach Anspruch 11, wobei der Luftreiniger (1) an einem Fahrzeugunterboden angeordnet ist.

## Revendications

1. Épurateur d'air (1) comprenant:
un élément de filtre (3);
une zone de guidage d'air (4) en communication fluidique avec l'élément de filtre (3); et
un volet de guidage d'air (6) étant disposé dans la zone de guidage d'air (4) et étant configuré pour régler un écoulement d'air (8) passant par la zone de guidage d'air (4), le volet de guidage d'air (6) étant monté sur une articulation pivotante (7) et étant configuré pour être tourné entre une position de fermeture et une position d'ouverture, le volet de guidage d'air (6) comprenant une section de fermeture (6a) et une section d'ouverture (6b) reliée à la section de fermeture (6a), l'articulation pivotante (7) étant disposée entre la section de fermeture (6a) et la section d'ouverture (6b), et la section de fermeture (6a) formant une surface de résistance à l'air pour l'écoulement d'air (8) passant à travers la zone de guidage d'air (4),
**caractérisé en ce que**
le volet de guidage d'air (6) comprend une ou plusieurs ouvertures (9).

2. Épurateur d'air (1) selon la revendication 1, dans lequel la section d'ouverture (6b) a une masse supérieure à celle de la section de fermeture (6a) de sorte que, en position fermée, un couple dirigé vers la position ouverte agit sur le volet de guidage d'air (6).

3. Épurateur d'air (1) selon la revendication 1 ou 2, dans lequel la section de fermeture (6a) a une longueur supérieure à celle de la section d'ouverture (6b).

4. Épurateur d'air (1) selon l'une quelconque des revendications 1 à 3, dans lequel chacune des sections d'ouverture (6b) et de fermeture (6a) est rectiligne et possède un axe longitudinal commun.

5. Épurateur d'air (1) selon l'une quelconque des revendications 1 à 4, dans lequel le volet de guidage d'air (6) comprend en outre une partie d'extrémité angulaire (6c) disposée au niveau de la section d'ouverture (6b) et formant un angle par rapport à la section d'ouverture (6b), l'angle se situant dans une plage de valeurs comprise entre 30° et 60°.

6. Épurateur d'air (1) selon l'une quelconque des revendications 1 à 5, comprenant en outre un ressort d'arrêt (11) configuré pour maintenir la section d'ouverture (6b) en position ouverte.

7. Épurateur d'air (1) selon l'une quelconque des revendications 1 à 6, comprenant en outre un ressort d'arrêt (10) configuré pour maintenir la section de fermeture (6a) en position fermée.

8. Épurateur d'air (1) selon l'une quelconque des revendications 1 à 7, dans lequel la zone de guidage d'air (4) est une zone d'alimentation en air (4) en amont de l'élément de filtre (3).

9. Épurateur d'air (1) selon l'une quelconque des revendications 1 à 8, comprenant en outre une pluralité de volets de guidage d'air (6) disposés dans la zone de guidage d'air (4).

10. Épurateur d'air (1) selon l'une quelconque des revendications 1 à 9, dans lequel l'épurateur d'air (1) est un dispositif de collecte de poussière.

11. Véhicule comprenant l'épurateur d'air (1) selon l'une quelconque des revendications 1 à 10.

12. Véhicule selon la revendication 11, dans lequel l'épurateur d'air (1) est disposé sur le dessous de caisse du véhicule.
